# EUROPEAN PATENT APPLICATION

(11) **EP 2 657 552 A2**
(43) Date of publication of application: **30.10.2013**
(21) Application number: 13165118.4
(22) Date of filing: 24.04.2013
(51) Int. Cl.: F16C 11/06

(54) **Ball joint**

(30) Priority: 25.04.2012 JP 2012100238
(71) Applicant: JTEKT CORPORATION, Osaka-shi Osaka 542-8502 (JP)
(72) Inventor: Shibata, Hideo, Osaka-shi, Osaka 542-8502 (JP); Mizuta, Shinichi, Osaka-shi, Osaka 542-8502 (JP)
(74) Representative: Winter, Brandl, Fürniss, Hübner, Röss, Kaiser, Polte - Partnerschaft

(57) **Abstract**

A ball joint (1) includes a tubular boot (5), an upper end portion (5a) and a lower end portion (5b) of which are fitted onto an intermediate portion of a shaft (12) of a ball stud (4) and an open end (6a) of a housing (2), respectively. An annular lip portion (70) is formed at the upper end portion (5a) of the boot (5). The lip portion (70) has a first sliding contact face (32) that is in contact with an outer periphery of the shaft (12), a second sliding contact face (33) that is in contact with a lower face (52b) of the knuckle arm (51), and an annular rib (61) that is formed so as to project inward beyond the first sliding contact face (32) from an upper end portion of the first sliding contact face (32). The rib (61) is elastically deformed due to contact with the shaft (12) so as to extend along the first sliding contact face (32) and project upward beyond the second sliding contact face (33).

## Description

### BACKGROUND OF THE INVENTION

### 1. Field of the Invention

The invention relates to a ball joint.

### 2. Discussion of Background

For example, at a junction between a knuckle arm of a suspension and a steering device, there is provided a ball joint (so-called outer ball joint) that supports the knuckle arm such that the knuckle arm is steerable and movable in the up-down direction. Some of such ball joints include a metal ball stud, a closed-end cylindrical housing, a resin seat made of synthetic resin, and a tubular rubber boot (see, for example, WO2011/033867 A1). The ball stud includes a spherical head provided at a base end of its shaft. The housing holds the spherical head therein with the shaft projected from an opening of the housing. The resin seat is placed between the housing and the spherical head. The boot is attached to the housing. The ball stud is able to oscillate about the spherical head with respect to the housing, and is also able to rotate about the central axis of the shaft.

The boot covers the opening of the housing, and prevents foreign matters such as dirt and water from entering the housing through the junction between the knuckle arm and the steering device. One end and the other end of the boot are fitted onto an intermediate portion of the shaft and an open end of the housing (the end at which the opening is formed), respectively. A lip portion, which comes into elastic contact with the outer periphery of the shaft of the ball stud, is provided at the one end of the boot. In addition, grease is provided between the resin seat and the spherical head.

A knuckle hole used to attach the ball joint to the knuckle arm is formed in an attached face. The ball joint is attached to the knuckle arm by inserting the shaft of the ball stud into the knuckle hole and fixing the ball stud to the knuckle arm. In the above-described attached state, the lip portion is in elastic contact with both the attached face of the knuckle arm and the outer periphery of the shaft of the ball stud.

In this state, as the ball stud oscillates about the spherical head, which acts as a fulcrum, with respect to the housing, the lip portion provided at the one end of the boot (the end portion of the boot, which is fitted onto the intermediate portion of the shaft) moves together with the shaft in accordance with the oscillation of the ball stud. Therefore, when the ball stud oscillates greatly, a portion of the boot, which is located on the side on which the shaft is tipped, is contracted, and another portion of the boot, which is located on the side opposite to the side on which the shaft is tipped, is stretched toward the other end side. In such a case, when the lip portion is separated from the attached face of the knuckle arm in accordance with the oscillation of the ball stud, a gap may be formed not only between the lip portion and the attached face, but also between the lip portion and the outer periphery of the shaft. If a gap is formed between the lip portion and the outer periphery of the shaft, foreign matters are likely to enter the boot through the gap.

In cold regions in particular, the viscosity of grease provided between the resin seat and the spherical head increases, and a significantly high load is required to tilt the ball stud and the boot. Therefore, when the ball stud oscillates, a load applied to the lip portion becomes significantly high, and displacement of the lip portion is thus increased. Hence, in cold regions, the possibility that foreign matters such as dirt and water may enter the boot becomes high.

### SUMMARY OF THE INVENTION

The invention provides a ball joint configured to reliably prevent foreign matters from entering a boot.

According to a feature of an example of the invention, a lip portion is provided at one end of a boot. The lip portion has one end face that is in elastic contact with an attached face of an attached member, the inner periphery that is in elastic contact with the outer periphery of a shaft, and an annular rib that is formed at one end portion of the inner periphery. The rib is formed so as to project toward the inner side and is elastically deformed due to contact with the outer periphery of the shaft so that the rib extends along the inner periphery and projects to a side opposite to the other end side beyond the one end face. Therefore, in the rib, a force for restoring the rib to its original shape, that is, an elastic force for tipping the rib toward the inner side is constantly generated. Thus, a distal end portion of the rib is always in elastic contact with the outer periphery of the shaft.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a partial sectional view showing the configuration of a ball joint according to a first embodiment of the invention;
FIG. 2 is an enlarged sectional view showing an upper end portion of a boot in the ball joint and its surroundings according to the first embodiment;
FIG. 3 is a vertical sectional view of the boot according to the first embodiment;
FIG. 4 is a sectional view showing a state of a lip portion when a ball stud according to the first embodiment is oscillated greatly;
FIG. 5 is a partial sectional view showing the configuration of a ball joint according to a second embodiment of the invention;
FIG. 6 is an enlarged sectional view showing an upper end portion of a boot in the ball joint and its surroundings according to the second embodiment;
FIG. 7 is a vertical sectional view of the boot according to the second embodiment;
   and
FIG. 8 is a sectional view showing a state of a lip portion when a ball stud according to the second embodiment is oscillated greatly.

### DETAILED DESCRIPTION OF EMBODIMENTS

Hereinafter, embodiments of the invention will be described with reference to the accompanying drawings.

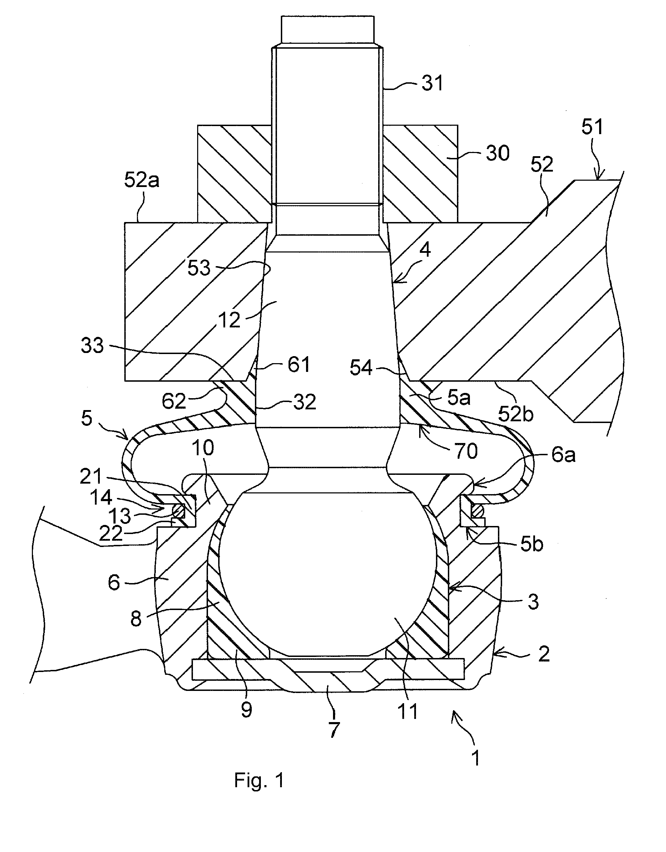

FIG. 1 is a partial sectional view showing the configuration of a ball joint 1 according to a first embodiment of the invention. FIG. 1 shows the state that is achieved after the ball joint 1 is attached to, for example, a knuckle arm (attached member) 51 for a suspension. The ball joint 1 is provided at a junction between the knuckle arm 51 and a steering device (not shown), and functions as an outer ball joint. The ball joint 1 supports the knuckle arm 51 such that the knuckle arm 51 is steerable and movable in the up-down direction.

The knuckle arm 51 includes a knuckle body (not shown) that is made of, for example, aluminum, and an aluminum bracket 52 that is fastened to a lower portion of the knuckle body. A knuckle hole (attachment hole) 53 is formed at a given position of a plate portion (attached portion) of the bracket 52 so as to pass through the plate portion in its thickness direction. A shaft 12 of a ball stud 4 is passed through the knuckle hole 53. In other words, the knuckle hole 53 is open at a lower face 52b. An inner peripheral wall that defines the knuckle hole 53 is formed into a tapered shape such that the diameter of the knuckle hole 53 increases downward.

The ball joint 1 includes a tubular housing 2, a resin seat 3 and the ball stud 4 that are held inside of the housing 2, and a tubular boot 5 attached to the housing 2. The housing 2 includes a tubular member 6 inside of which the resin seat 3 is arranged, and a plug plate 7 fixed to the lower end of the tubular member 6 so that the plug plate 7 plugs up the lower end of the tubular member 6. The upper end of the tubular member 6 is an open end 6a.

The resin seat 3 has a cup shape, and includes a tubular peripheral wall portion 8 and a bottom portion 9 that is provided at the lower end of the peripheral wall portion 8. The resin seat 3 is arranged such that the peripheral wall portion 8 is located along the inner periphery of the tubular member 6 and the bottom portion 9 faces the plug plate 7. The resin seat 3 is held between an annular rib portion 10 provided at the open end 6a and the plug plate 7. The inside diameter of the rib portion 10 is smaller than the outside diameter of a portion of the ball stud 4 (a spherical head 11 described later). The portion of the ball stud 4 and the resin seat 3 are retained within the tubular member 6 by the rib portion 10.

The ball stud 4 is a metal member in which the spherical head 11 having a spherical outer periphery and the shaft 12 projecting upward from the spherical head 11 are integrally formed. The spherical head 11 is arranged such that the center thereof is located on the central axis of the shaft 12. An external thread portion 31 is formed in the distal end of the shaft 12. The spherical head 11 is covered with the resin seat 3 inside of the tubular member 6, and the shaft 12 projects from the open end 6a of the tubular member 6. Most part of the spherical head 11 except a portion near the shaft 12 is covered with the resin seat 3. The spherical head 11 is held by the housing 2 via the resin seat 3.

The inner periphery of the resin seat 3 has a shape that conforms to the outer periphery of the spherical head 11. Grease is provided between the resin seat 3 and the spherical head 11. The spherical head 11 is slidable with respect to the resin seat 3, and the ball stud 4 is able to oscillate with respect to the housing 2 about the spherical head 11. Further, the ball stud 4 is able to rotate about the central axis of the shaft 12.

The boot 5 is formed in a tubular shape in which an upper end portion (one end) 5a is smaller in diameter than a lower end portion (the other end) 5b, and an intermediate portion thereof bulges outward with respect to the lower end portion 5b. The boot 5 is made of an elastic material (e.g. chloroprene rubber (CR), arylonitrile-butadiene rubber (NBR), and natural rubber). The upper end portion 5a of the boot 5 is fitted onto an intermediate portion of the shaft 12, and is in elastic contact with the outer periphery of the shaft 12. The upper end portion 5a of the boot 5 is also in contact with the lower face 52b in a state shown in FIG. 1.

The lower end portion 5b of the boot 5 is fitted onto the open end 6a of the tubular member 6. The lower end portion 5b of the boot 5 is fixed to the tubular member 6 by a clip 13 that is attached to the lower end portion 5b. Specifically, an annular groove 14 into which the boot 5 is fitted is formed in the outer periphery of the open end 6a of the housing 2, and the annular groove 14 extends in the circumferential direction of the outer periphery. An opening formed on the inner side of the open end 6a is covered with the boot 5. Thus, foreign matters such as dirt and water are prevented from entering the ball joint 1. The lower end portion 5b of the boot 5 is inserted into the annular groove 14. The lower end portion 5b includes a cylindrical portion 21, and an annular folded-back portion 22 that is folded back so as to extend outward from the distal end of the cylindrical portion 21. The clip 13 is, for example, a steel spring member that has an annular shape and wound once, but may be wound twice or three times. The clip 13 is fitted onto the cylindrical portion 21, at a position inside the annular groove 14, and fixes the cylindrical portion 21 to the tubular member 6 by tightening the cylindrical portion 21 from the outside.

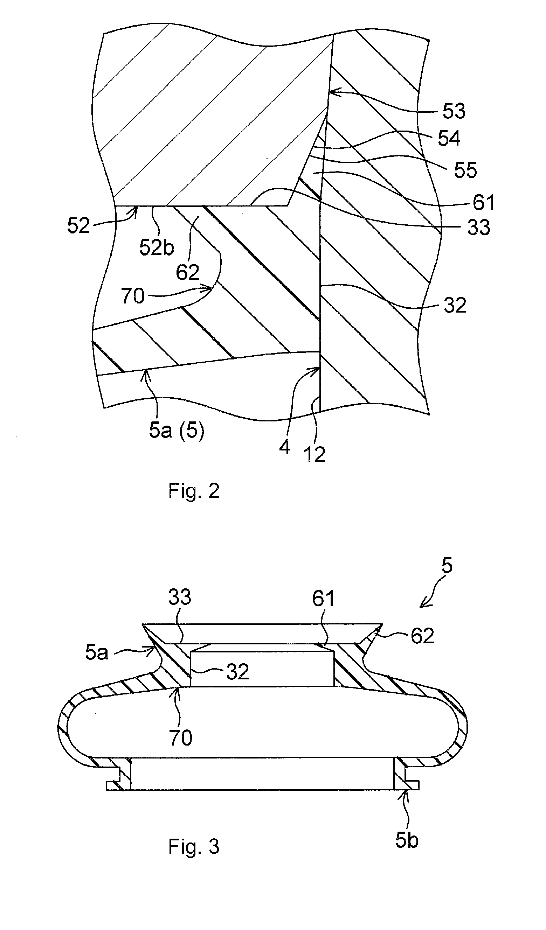

FIG. 2 is an enlarged sectional view showing the upper end portion 5a of the boot 5 in the ball joint 1 and its surroundings. FIG. 3 is a vertical sectional view of the boot 5. FIG. 3 shows a state where the boot 5 is contracted in the longitudinal direction, which corresponds to the state shown in FIG. 1. In the boot 5, an annular lip portion 70 having a generally cylindrical shape is formed integrally with the upper end portion 5a. The lip portion 70 will be described with reference to FIG. 2 and FIG. 3.

The lip portion 70 has a first sliding contact face (inner periphery) 32 to be in sliding contact with the outer periphery of the shaft 12, a second sliding contact face (one end face) 33 to be in sliding contact with the lower face 52b, an annular rib 61 that is formed at an upper end portion of the first sliding contact face 32 (i.e., a boundary between the first sliding contact face 32 and the second sliding contact face 33), and an annular projection 62 having an annular shape and formed at an outer end portion of the second sliding contact face 33. The first sliding contact face 32 is a cylindrical face centering on the central axis of the shaft 12 of the ball stud 4. The entirety of the first sliding contact face 32 is in sliding contact with the outer periphery of the shaft 12 when the ball stud 4 is passed through the boot 5.

The second sliding contact face 33 forms an upper end face of the lip portion 70. The second sliding contact face 33 continues from the first sliding contact face 32 via the rib 61. The second sliding contact face 33 is formed into an annular shape centering on the central axis of the shaft 12 of the ball stud 4, and is a flat face that is substantially orthogonal to the first sliding contact face 32 when the rib 61 is in a free state. The rib 61 extends inward (inward in the radial direction of the shaft 12 of the ball stud 4) from the upper end portion of the first sliding contact face 32, and has an acute triangle sectional shape.

In a state where the ball joint 1 is assembled, the first sliding contact face 32 is in sliding contact with the outer periphery of the shaft 12 of the ball stud 4. In this state, the annular rib 61 comes into contact with the shaft 12 of the ball stud 4 and is pushed up so as to extend vertically upward. In other words, the rib 61 is elastically deformed so as to project upward beyond the second sliding contact face 33 in the up-down direction. Therefore, in the rib 61 of the boot 5 attached to the ball joint 1, a force for restoring the rib 61 to its original shape, that is, an elastic force for tipping the rib 61 toward the inner side (an elastic force in a direction in which the distal end portion of the rib 61 pivots inward about its base end portion) is constantly generated.

The annular projection 62 projects upward in an outward oblique direction from the outer end portion of the second sliding contact face 33. Specifically, the annular projection 62 extends upward and obliquely outward. The annular projection 62 has an acute triangle sectional shape. In the state shown in FIG. 1, the annular projection 62 is deformed by being pressed against the lower face 52b, and extends radially outward beyond the outer periphery of the lip portion 70.

In order to attach the ball joint 1 to the knuckle arm 51, the shaft 12 of the ball stud 4 is inserted into the knuckle hole 53, and the shaft 12 is pushed further into the knuckle hole 53 until the lip portion 70 comes into contact with the lower face 52b. Then, a nut 30 is screwed to the external thread portion 31 that projects from the upper side of the bracket 52, and the nut 30 is fastened tightly. Thus, the ball stud 4 is fixed to the knuckle arm 51, and is thus attached to the knuckle arm 51 of the ball joint 1.

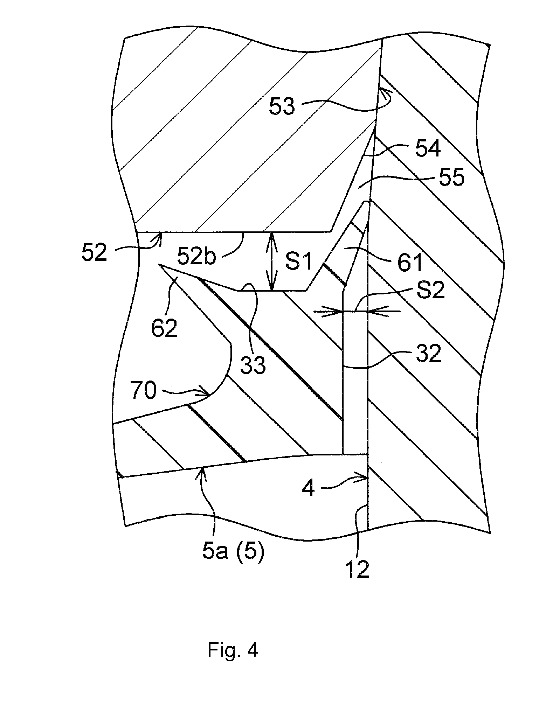

As described above, the inner peripheral wall of the knuckle arm 51, which defines the knuckle hole 53, is formed into a tapered shape such that the diameter of the knuckle hole 53 increases downward. As shown in FIG. 2, an annular sloped face 54 formed of a conical face is formed at an open end portion of the inner peripheral wall that defines the knuckle hole 53, and the diameter of the conical face is larger than that of a portion of the inner peripheral wall that defines the knuckle hole 53 except the open end portion. Therefore , in the state where the ball joint 1 is attached to the knuckle arm 51, an annular housing space 55 is formed by the sloped face 54 and the outer periphery of the shaft 12 (see FIG. 2 and FIG. 4). The sectional shape of the housing space 55 is an acute triangle pointed upward. The housing space 55 has a shape that substantially coincides with the distal end portion of the rib 61, and the distal end portion of the rib 61 is housed in the housing space 55. In the present embodiment, the rib 61 in the housing space 55 is pressed to the sloped face 54 and the outer periphery of the shaft 12. However, the rib 61 is not pressed to the sloped face 54 and the outer periphery of the shaft 12 so strongly, and therefore the rib 61 in the housing space 55 is not crushed (not plastically deformed). The sloped face 54 is formed by cutting off the inner wall of the open end portion of the knuckle hole 53, from the lower face 52b through a cutting work or the like.

In the state achieved after the ball joint 1 is attached to the knuckle arm 51 shown in FIG. 1, as the ball stud 4 oscillates about the spherical head 11 that serves as a fulcrum, the lip portion 70 of the boot 5 moves together with the shaft 12 in accordance with the oscillation of the ball stud 4. Therefore, if the ball stud 4 oscillates greatly, a portion of the boot 5, which is located on the side on which the shaft 12 is tipped, is contracted, and another portion of the boot 5, which is located on the side opposite to the side on which the shaft 12 is tipped, is stretched toward the other end side. Due to the oscillation of the ball stud 4 about the spherical head 11, the first sliding contact face 32 of the lip portion 70 of the boot 5 slides on the outer periphery of the shaft 12, and the second sliding contact face 33 of the lip portion 70 of the boot 5 slides on a portion of the lower face 52b, which is located around the knuckle hole 53. At this time, the distal end portion of the rib 61 contacts the outer periphery of the shaft 12.

FIG. 4 is a sectional view showing the state of the lip portion 70 when the ball stud 4 oscillates greatly. As described above, an elastic force for tipping the rib 61 toward the inner side is constantly generated in the rib 61 of the lip portion 70 of the boot 5, and the distal end portion of the rib 61 is constantly in elastic contact with the outer periphery of the shaft 12.

When an oscillation angle of the ball stud 4 is significantly large, the lip portion 70 is separated from the lower face 52b of the knuckle arm 51 due to the oscillation of the ball stud 4, and a gap S1 may be formed between the second sliding contact face 33 of the lip portion 70 of the boot 5 and the lower face 52b of the knuckle arm 51, as shown in FIG. 4. In such a case, a gap S2 may also be formed between the first sliding contact face 32 of the lip portion 70, and the outer periphery of the shaft 12 as shown in FIG. 4.

Even in such a case, because the force for tipping the rib 61 toward the inner side is constantly generated in the rib 61, the rib 61 is tilted toward the inner side about the base end portion of the rib 61 as shown in FIG. 4, and the distal end portion of the rib 61 is kept in elastic contact with the outer periphery of the shaft 12. Therefore, sealing between the lip portion 70 and the outer periphery of the shaft 12, which is provided by the rib 61, is maintained. Thus, foreign matters such as dirt and water are prevented from entering the boot 5. Accordingly, the service life of the ball joint 1 is extended.

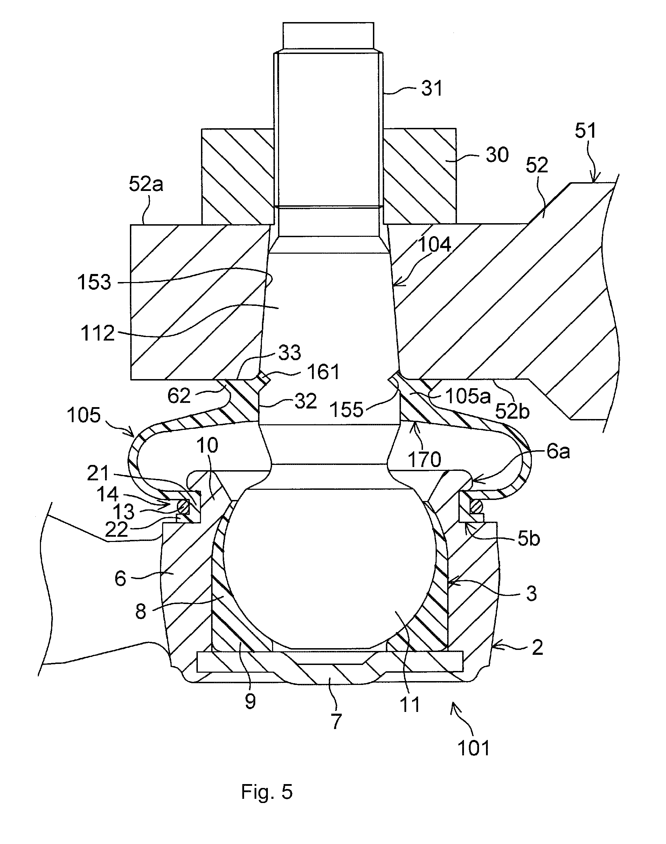

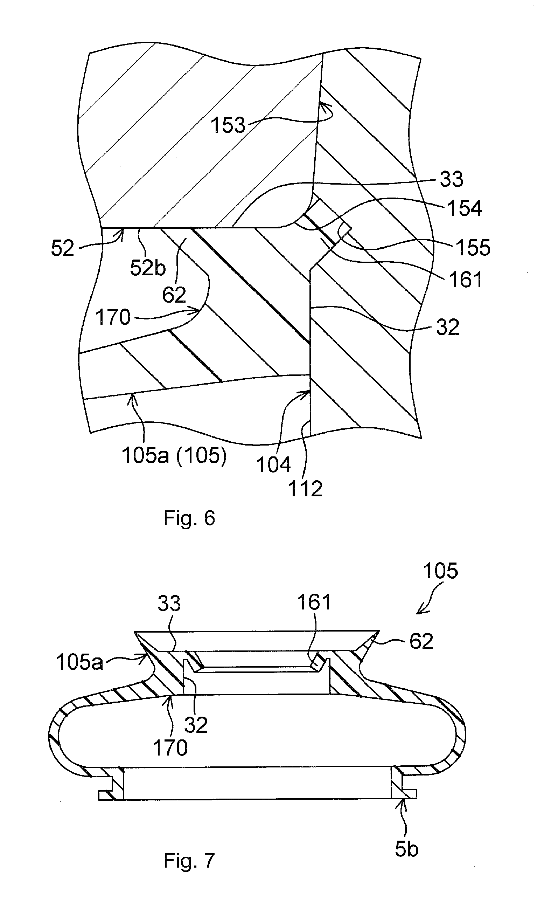

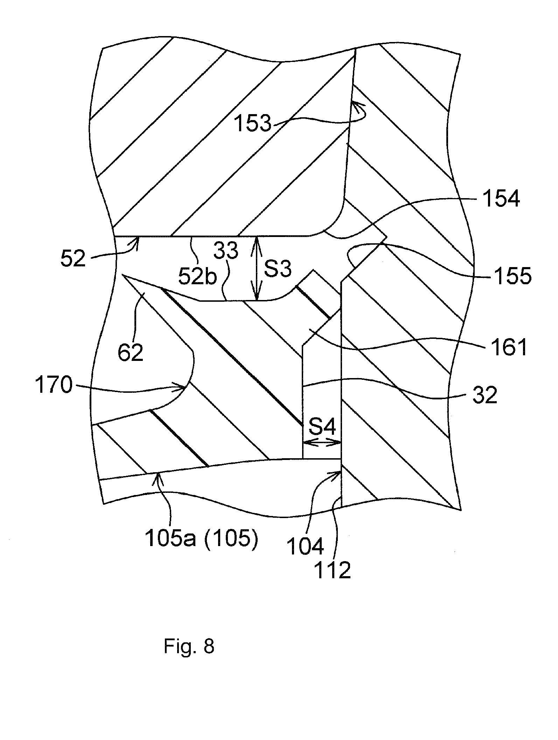

FIG. 5 is a partial sectional view showing the configuration of a ball joint 101 according to a second embodiment of the invention. FIG. 5 shows the state achieved after the ball joint 101 is attached to, for example, the knuckle arm 51 for a suspension. In the ball joint 101 according to the second embodiment, portions corresponding to those of the ball joint 1 according to the first embodiment will be denoted by the same reference numerals as those in FIG. 1 to FIG. 4, and description thereof will be omitted. The ball joint 101 according to the second embodiment is different from the ball joint 1 according to the first embodiment in that an annular housing groove 155 that houses a rib 161 is formed in the outer periphery of a shaft 112 of a ball stud 104, that the rib 161 has a generally rectangular shape that fits the housing groove 155, and that an inner peripheral wall that defines a knuckle hole (attachment hole) 153 is formed into a sloped face having a uniform slope angle, instead of forming a sloped face 54 in an open end portion of the inner peripheral wall that defines the knuckle hole 153. More specifically, a chamfered face 154 is formed at the entire circumference of the open end of the knuckle hole 153 (see FIG. 6 and FIG. 8). Except the fact that the housing groove 155 is formed, the shaft 112 has a configuration substantially the same as that of the shaft 12 in the first embodiment, and the ball stud 104 has a configuration substantially the same as that of the ball stud 4 in the first embodiment. Moreover, the knuckle hole 153 has a configuration substantially the same as that of the knuckle hole 53 in the first embodiment except that the sloped face 54 is not formed at the open end portion of the knuckle hole 153.

The housing groove 155 is formed in the outer periphery of the shaft 112 at a portion located at the open end portion of the inner peripheral wall that defines the knuckle hole 153 in a state where the ball joint 101 is attached to the knuckle arm 51. The housing groove 155 is a V-shaped groove, and is formed in the outer periphery of the shaft 112 in the entire region along the circumferential direction. FIG. 6 is an enlarged sectional view of an upper end portion (one end) 105a of a boot 105 in the ball joint 101 and its surroundings. FIG. 7 is a vertical sectional view of the boot 105. FIG. 7 shows a state where the boot 105 is contracted in the longitudinal direction, which corresponds to the state shown in FIG. 5.

The boot 105 has an annular lip portion 170 that has a generally cylindrical shape and is formed integrally with the upper end portion 105a. The lip portion 170 will be described with reference to FIG. 6 and FIG. 7. The lip portion 170 has a first sliding contact face 32, a second sliding contact face 33, an annular rib 161 formed at an upper end portion of the first sliding contact face 32 (i.e., a boundary between the first sliding contact face 32 and the second sliding contact face 33), and an annular projection 62, which are formed integrally with each other. The rib 161 extends downward toward the inner side (radially inner side of the shaft 112 of the ball stud 104) from the upper end portion of the first sliding contact face 32. The rib 161 has a generally rectangular sectional shape so that a portion of the rib 161 is housed in the housing groove 155.

In the state where the ball joint 101 is assembled, the first sliding contact face 32 is in sliding contact with the outer periphery of the shaft 112 of the ball stud 104. In this state, the rib 161 comes into contact with the shaft 112 of the ball stud 104 and is pushed up so as to extend upward. In other words, the ribs 161 is elastically deformed so as to project upward be yond the second sliding contact face 33 in the up -down direction. Therefore, in the rib 161 of the boot 105 attached to the ball joint 101, a force for restoring the rib 161 to its original shape, that is, an elastic force for tipping the rib 161 toward the inner side (an elastic force in a direction in which the distal end portion of the rib 161 pivots inward about its base end portion) is constantly generated.

In a state where the ball joint 101 is attached to the knuckle arm 51, the rib 161 is housed in the housing groove 155. The housing groove 155 has a shape that substantially coincides with the corner portion of the rib 161, and the corner portion of the rib 161 is housed in the housing groove 155. In the present embodiment, the rib 161 in the housing space 155 is pressed by the chamfered face 154. However, the rib 161 is not pressed by the chamfered face 154 so strongly, and therefore the rib 161 in the housing space 155 is not crushed (not plastically deformed).

FIG. 8 is a sectional view showing a state of the lip portion 170 when the ball stud 104 oscillates greatly. When an oscillation angle of the ball stud 104 is significantly large, the lip portion 170 is separated from the lower face 52b of the knuckle arm 51 in accordance with the oscillation of the ball stud 104, and a gap S3 may be formed between the second sliding contact face 33 of the lip portion 170 of the boot 105 and the lower face 52b of the knuckle arm 51, as shown in FIG. 8. In such a case, a gap S4 may also be formed between the first sliding contact face 32 of the lip portion 170, and the outer periphery of the shaft 112 as shown in FIG. 8.

Even in such a case, because the force for tipping the rib 161 toward the inner side is constantly generated in the rib 161, the rib 161 is tilted toward the inner side about the base end portion of the rib 161 as shown in FIG. 8, and the distal end portion of the rib 161 is kept in elastic contact with the outer periphery of the shaft 112 (in the state shown in FIG. 8, the outer periphery of the shaft 112 at a portion located below the housing groove 155). Therefore, sealing between the lip portion 170 and the outer periphery of the shaft 112, which is provided by the rib 161, is maintained. Thus, foreign matters such as dirt and water are prevented from entering the boot 105. Accordingly, the service life of the ball joint 1 is extended.

While the two embodiments of the invention have been described above, the invention may be implemented in various other embodiments. For example, the first embodiment and the second embodiment may be combined with each other. That is, the sloped face 54 may be formed in the open end portion of the inner peripheral wall that defines the knuckle hole 53 or 153, and the annular housing groove 155 that houses the rib may be formed in the outer periphery of the shaft 12 of the ball stud 4 or the outer periphery of the shaft 112 of the ball stud 104.

In the foregoing embodiments, the cases where the ball joints 1, 101 are attached to the knuckle arms for a suspension are described. However, the invention may be applied to the ball joints 1, 101 that are attached to knuckle arms for steering. Various other design changes may also be made.

## Claims

1. A ball joint, comprising:
a ball stud having a shaft that is inserted into an attachment hole formed in an attached face of an attached member, and a spherical head provided at one end of the shaft;
a tubular housing that has an opening, and that holds therein the spherical head with the shaft projecting from the opening; and
a tubular elastic boot, one end and the other end of which are fitted onto an intermediate portion of the shaft and an end portion of the housing, respectively, wherein
an annular lip portion is formed at the one end of the boot, the lip portion having one end face that is in contact with the attached face, an inner periphery that is in contact with an outer periphery of the shaft, and an annular rib that is formed so as to project inward beyond the inner periphery from one end portion of the inner periphery, and that is elastically deformed due to contact with the shaft so that the rib extends along inner periphery and projects to a side opposite to the other end side beyond the one end face.

2. The ball joint according to claim 1, wherein a sloped face is formed in an open end portion of the attachment hole so that an annular housing space that houses the rib is formed between the sloped face and the outer periphery of the shaft.

3. The ball joint according to claim 1 or 2, wherein an annular housing groove that houses the rib is formed in the outer periphery of the shaft of the ball stud.
